# EUROPÄISCHE PATENTANMELDUNG

(11) **EP 0 767 011 A1**
(43) Veröffentlichungstag der Anmeldung: **09.04.1997**
(21) Anmeldenummer: 95115749.4
(22) Anmeldetag: 06.10.1995
(51) Int. Cl.: B09B 3/00

(54) **Anlage zur mechanisch-biologischen Zwischenbehandlung von Müll**

(71) Anmelder: Rindelaub, Frank Alex Erich, 2014 Bôle (CH)
(72) Erfinder: Rindelaub, Frank Alex Erich, 2014 Bôle (CH)
(74) Vertreter: Braun, André, jr.

(57) **Zusammenfassung**

Die Anlage dient der biologischen Behandlung des organischen Anteils des in einer Separationspresse (5) getrennten Mülls in einer Fermentationsanlage (7), wobei die Feststoffanteile nach jeder Stufe zusammen einer Verbrennungsanlage (6) zugeführt werden. Alternativ kann der Fermentationsanlage (7) eine Kompostieranlage (33) nachgeschaltet sein, in der die Feststoffanteile des Gärgutes kompostiert anstatt verbrannt werden.

## Beschreibung

Die vorliegende Erfindung betrifft eine Anlage zur mechanisch-biologischen Zwischenbehandlung von Müll zum Vorschalten vor eine Verbrennungsanlage.

Abfälle unterschiedlicher Art, die für den Zweck der vorliegenden Beschreibung unter dem Stichwort Müll zusammengefasst sind, werden in zunehmendem Masse nicht einfach entsorgt, sondern verwertet. Die Verwertung besteht teilweise im Recycling der Rohstoffe, zum anderen Teil in der Gewinnung der im Müll gebundenen Energie durch dessen Verbrennung. Die Müllverbrennung gelangt aber mit zunehmend verschärften Vorschriften bei gleichzeitigem Anwachsen des zu verbrennenden Müllaufkommens vielerorts an Kapazitätsgrenzen. Zudem hängt die Engergiegewinnung stark von der Zusammensetzung des Mülls ab und ist häufig suboptimal.

Ein weiteres Problem, das dringend ansteht und heute noch nicht gelöst werden kann, ist die Aufarbeitung des Inhalts von Mülldeponien in der gleichen Weise wie neu anfallender Müll.

Der Erfindung liegt die Aufgabe zugrunde, Müll so zur Verbrennung vorzubereiten, dass die nachfolgende Verbrennung in ökonomischer und ökologischer Hinsicht optimal erfolgt. Vor allem zielt die Aufgabe dahin, bestehende Mülldeponien durch Aufarbeitung zu sanieren.

Erfindungsgemäss wird dies gelöst durch eine Anlage der eingangs erwähnten Art, die sich auszeichnet durch die Kombination einer Separationspresse und einer nachgeschalteten Fermentationsanlage, sowie Mitteln zur Zuführung der brennbaren Fraktion am Ausgang der Presse zu einer Anlage zur thermischen Verwertung. Vorzugsweise ist der Fermentationsanlage eine Eindampfanlage für die Flüssigfraktion des Fermentationsprodukts nachgeschaltet, die ebenfalls mit Mitteln zur Zuführung des Feststoffrests zur Verbrennungsanlage versehen ist.

Im folgenden werden anhand der beiliegenden Zeichnungen Ausführungsbeispiele der Erfindung beschrieben. Es zeigen
- Fig. 1: ein Ablaufschema einer Anlage zur Zwischenbehandlung von Müll,
- Fig. 2: ein Ablaufschema einer anderen Anlage für eine aufwendigere Zwischenbehandlung von Müll.

Der angelieferte Müll 1 umfasst alle Arten von Abfällen von Privathaushalten, Gewerbebetrieben etc. oder aus sanierungsbedürftigen Deponien. Dieser Müll gelangt zunächst zu einer Vorsortierung 2, um die rezyklierbaren und die nicht weiterverwertbaren Anteile zu entfernen. So werden beispielsweise in einer Siebrüttelanlage Bauschutt, Steine, Keramik, Glas etc. herausgeholt. Diese Stoffe, die bis zu ca. 5 % der Gesamtmenge ausmachen, können in gewissem Umfang als Baustoffe verwertet werden, oder sie gelangen auf Deponien 4.

In einem Magnetabscheider werden Eisenteile entfernt, die von Stahlwerken wiederverwertet werden. Im Durchschnitt kann dieser Anteil ebenfalls üblicherweise bis zu ca. 5 Gew. % betragen.

Schliesslich werden durch mannuelles Auslesen andere rezyklierbare Stoffe, wie Papier, Plastik, Batterien, Flaschen, NE-Metalle etc. herausgelesen. Der Anteil dieser Stoffe an der ursprünglichen Menge kann bis zu ca. 10 Gew. % betragen.

Der verbleibende Müll, typischerweise somit ca. 80 Gew. % der Ausgangsmenge, wird einer Separationspresse 5 zugeführt. Diese Presse komprimiert den Müll mit sehr hohem Druck von beispiels- weise 1000 bar, so dass der gesamte organische Anteil als Mark herausgepresst wird und nur der reine Feststoffanteil zurück- bleibt. Letzterer umfasst im wesentlichen die brennbaren Anteile, die beispielsweise ca. 48 Gew. % der ursprünglichen Menge ausmachen. Der organische Anteil beträgt entsprechend ca. 32 Gew. %.

Der brennbare Feststoffanteil wird, ggf. nach einer zusätzlichen Ballenpressung, einer Verbrennungsanlage 6 zugeführt. Der herausgepresste organische Anteil wird einer Fermentations- anlage zugeführt. Eine geeignete Fermentationsanlage 7 ist z.B. in der Patentanmeldung Nr. EP-A-94810109.2 und in der amerikanischen Patentanmeldung Nr. 08/200,679 vom 23. Februar 1994 beschrieben. Bei der Fermentation werden die organischen Bestandteile unter Entstehung von Biogas 8 in einem anaeroben Prozess abgebaut. Das Biogas 8, etwa 6 Gew. % der Ausgangsmenge, dient teilweise als Betriebsenergie für die Anlage. Der grössere Teil kann aber extern abgesetzt werden.

Das Gärgut, ca. 26 Gew. % der Ausgangsmenge, wird am Ende des Fermentationsvorganges entnommen und in einem Separator 9 entwässert. Dabei ergeben sich ca. 10 % Feststoffe und ca. 16 % Flüssigkeit, d.h. Wasser mit einem geringen Feststoffanteil. Die 10 % Feststoffe werden mit dem Feststoffanteil von der Separationspresse zusammengeführt, um in die Verbrennung zu gelangen.

Je nach der Konsistenz des biologisch abbaubaren Anteils, der dem Fermenter zugeführt wird, kann es erforderlich sein, einen Teil der Flüssigkeit vom Ausgang zum Eingang des Fermenters zurückzuführen, um das zu vergarende Material zu verdünnen. Gleichzeitig kann diese Rückführung zum Impfen des zugeführten Materials dienen.

Die Flüssigkeit wird in einer Eindampfanlage 10 (teilweise) eingedampft. Dabei bleiben erneut Feststoffe zurück, die allerdings nur noch maximal 1 % der Ausgangsmenge betragen. Der Dampf wird über Brieden 11 kondensiert und die bei der Eindampfung zurückbleibenden Feststoffe werden ebenfalls der Verbrennung zugeführt.

Alternativ kann die nach dem Abpressen verbleibende Flüssigkeit 12 in einer Klärungsanlage weiterbehandelt werden. Es kann eine chemisch-biologische Behandlung (Flocken, Fällen) erfolgen, die evtl. mehrstufig ist. Alle diese Methoden sind in der Abwasserbehandlung geläufig.

Die Anlage ermöglicht eine äusserst wirtschaftliche Verwertung von Müll unter optimaler Berücksichtigung ökologischer Gesichtspunkte. Die beispielsweise angegebenen Mengen bzw. Teilmengen ergeben folgende Bilanz: Aus 1 t Müll werden ca. 200 kg rezyklierbare Stoffe aussortiert. Die Biogasproduktion führt zu ca. 50 m³ Gas. Etwa 640 kg Feststoffe dienen in der Müllverbrennungsanlage zur Erzeugung von Warme.

Gleichzeitig wird kein oder nur sehr wenig Deponievolumen benötigt, und es bleiben ca. 150 l sauberes Wasser übrig. Die Schadstoffemission ist minimal. Diese vorteilhaften Eigenschaften machen die Anlage vor allem für die Aufbereitung des in sanierungsbedürftigen Deponien gelagerten Mülls geeignet. Nach heutigen Erkenntnissen sind praktisch alle Mülldeponien kurz- oder mittelfristig sanierungsbedürftig.

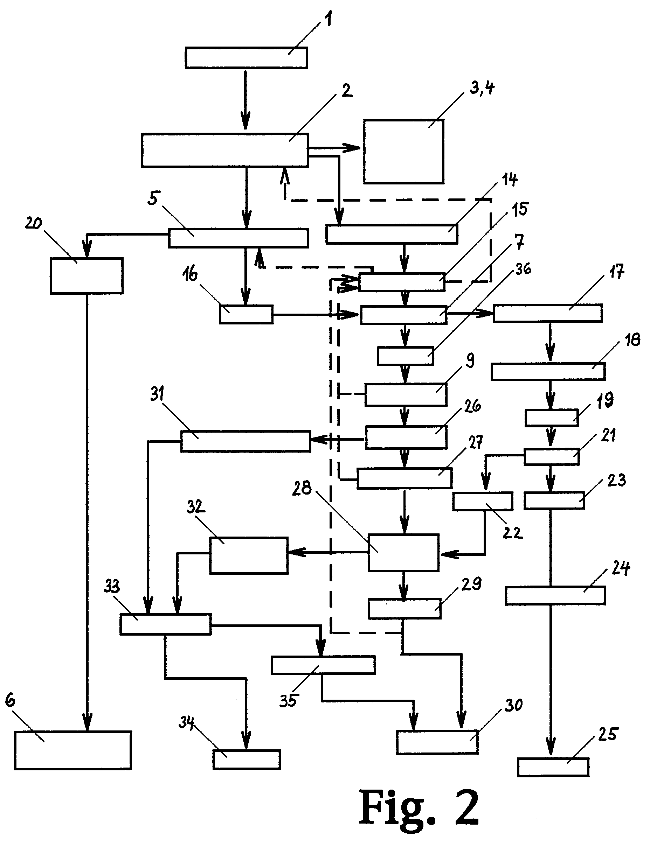

Die Eignung einer derartigen Anlage für die erwünschte Zwischenbehandlung von Müll hängt zum einen von der Art des zu verarbeitenden Mülls ab, d.h. von seiner Zusammensetzung, bzw. davon, wie weitgehend in den Haushalten und Betrieben eine Trennung des Mülls vorgenommen wird. Zum anderen sind die gesetzlichen Bestimmungen bezüglich der Abbauprodukte etc. von Bedeutung. Je nach den Anforderungen kann eine einfache Anlage, wie sie vorstehend beschrieben wurde, den Anforderungen nicht genügen, sondern es muss eine aufwendigere Anlage vorgesehen werden, wie sie in Figur 2 gezeigt ist.

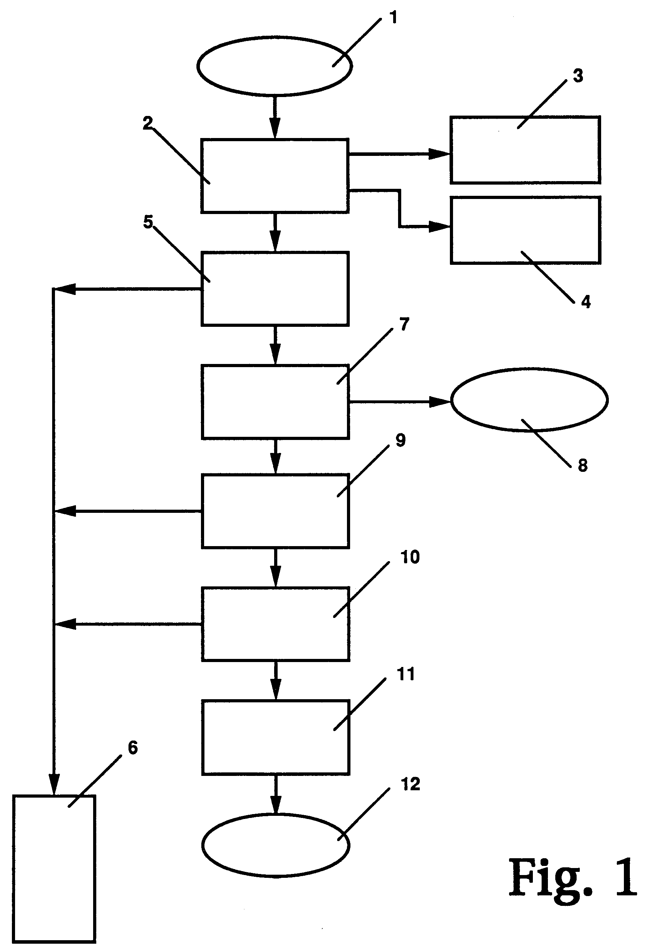

Gleiche Anlagenteile oder Abbaustufen wie in Figur 1 werden in Figur 2 mit den gleichen Bezugszeichnen gekennzeichnet. So wird auch bei der Anlage gemäss Figur 2 von angeliefertem Müll 1 ausgegangen, im vorliegenden Fall beispielsweise einer Menge von 100,000 Tonnen pro Jahr.

Dieser Müll gelangt in einen Annahme- und Aufbereitungsbereich 2, in dem verschiedene vorbereitende Arbeiten, wie beispielsweise Sieben und Trennen von wiederverwertbaren Stoffen und solchen Stoffen, die den weiteren Ablauf behindern oder stören, wie grössere mineralische Teile und Materialverbund, ausgeführt werden. Die Stoffe, die in diesem Bereich vom Müll getrennt werden, betragen in einem konkreten Beispiel, das dieser vorliegenden Anlage zugrunde liegt, beispielsweise 12.5 %.

Das Sieben dient der Abtrennung einer Fraktion 14 mit einer Korngrösse von beispielsweise < 40 mm von den grösser dimensionierten Teilen. Wenn der Müll mit Fahrzeugen gesammelt wird, die eine Zerkleinerung vornehmen, dann kann dieser Anteil beispielsweise 37 bis 38% betragen.

Der gröbere Anteil gelangt nach dem Sieben vom Annahme- und Aufbereitungsbereich in eine Separationspresse 5, in der wiederum der gesamte organische Anteil herausgepresst wird und der reine Feststoffanteil zurückbleibt. Wenn etwa die Hälfte des gesamten Mülls in die Presse gelangt, so beträgt die herausgepresste organische Pulpe 16 ca. 20% und die verbleibende brennbare Fraktion 20 etwa 30%. Diese brennbare Fraktion wird einer Anlage 6 zur thermischen Verwertung durch Verbrennung, Pyrolyse, Vergasung, etc. zugeführt.

Die Fraktion 14 kann häufig noch einen verhältnismässig hohen mineralischen Anteil haben. Um diesen vom organischen Anteil zu trennen, wird die Fraktion 14 einer Waschanlage 15 zugeführt. In der Waschanlage werden die organischen Anteile, die als "Verschmutzung" auf den mineralischen Trägern vorhanden sind, durch das Waschwasser abgelöst. Die mineralischen Stoffe werden zu den deponiefähigen Stoffen 3, 4 addiert. Das Waschwasser mit einem hohen organischen Anteil wird dann zusammen mit der Pulpe 16 einer Fermentationsanlage 7 zugeführt.

Es kann sich als zweckmässig erweisen, das Waschwasser aufzuteilen in einem weniger organischen Anteil enthaltenden Teil, der zum Eingang der Separationspresse zurückgeführt wird, um dort der Anfeuchtung des in die Presse eingesetzten Materials zu dienen, während der Rest mit hohem Anteil an organischem Material direkt der Fermentationsanlage 7 zugeführt wird. Die Gesamtmenge der in die Fermentationsanlage gelangenden Anteile kann beispielsweise 57 bis 58% betragen.

Bei der Fermentation werden wie bereits im Zusammenhang mit der Beschreibung der Anlage gemäss Figur 1 erwähnt, die organischen Bestandteile unter Entstehung von Biogas 17 in einem anaeroben Prozess abgebaut. Das entstehende Biogas 17 beträgt im vorliegenden Fall etwa 14,5% der Ausgangsmenge.

Das Biogas wird einer Gasaufbereitungsanlage 18 zugeführt. Das aufbereitete Biogas 19, im vorliegenden konkreten Fall ca. 12 Millionen m³ pro Jahr, wird einem Bioheizkraftwerk 21 zugeführt, das einerseits Wärme 22 und andererseits elektrischen Strom 23 erzeugt.

Die Wärme, im vorliegenden Fall ca. 36 GWh pro Jahr, wird, wie nachfolgend noch beschrieben, in der Anlage selbst verwertet. Der entstehende Strom, im vorliegenden Beispiel ca. 24 GWh pro Jahr, kann teilweise als Eigenverbrauch 24 zum Betrieb der Anlage benutzt werden und andererseits in der Grössenordnung von ca. 16 GWh pro Jahr in das Netz 25 eingespeist werden.

Das nach der Fermentation verbleibende Gärgut 36, etwa 43%, wird einem Separator 9 zugeführt, indem das enthaltene Wasser 27 abgepresst wird.

Das Presswasser 27 wird teilweise für das Waschen der kleinkörnigen Fraktion 14 in der Waschanlage 15 benutzt. Um für diese Wasserrückführung relativ sauberes Wasser zu haben kann es notwendig sein, im Separator 9 eine Vorseparation durchzuführen und einen zweiten Separator 26 nachzuschalten in dem das Restwasser separiert wird.

Der nach der Separation verbleibende Feststoffanteil hat etwa 40% Trockensubstanz und beträgt ca. 31% der Ausgangsmenge. Dieser Feststoff 31 wird einer Kompostieranlage 33 zugeführt.

Der Anteil des Presswassers 27 der nicht zur Waschanlage rückgeführt wird, gelangt in eine thermische Eindickanlage 28, die mit der Wärme 22 gespeist wird. Durch die Eindickung entsteht einerseits ein Konzentrat 32 mit ca. 35% Trockensubstanz, das ebenfalls der Kompostieranlage 33 zugeführt wird. Das Konzentrat 32 beträgt etwa 4% der Ausgangsmenge, sodass die Kompostieranlage insgesamt ca. 35% der Ausgangsmenge aufnimmt.

Zum anderen entsteht bei der thermischen Eindickung ein Kondensat 29, und zwar ca. 8% der Ausgangsmenge. Dieses Kondensat wird teilweise ebenfalls für den Betrieb der Waschanlage 15 verwendet und zum anderen einem Biofilterturm 30 zugeführt, sodass kein Abwasser anfällt.

In der Kompostieranlage 33 entsteht Kompost 34 und zwar ca. 16% der ursprünglichen Menge. Die Abluft 35 der Kompostieranlage, ca. 19% der ursprünglichen Menge, gelangt in den Biofilterturm 30, sodass auch von der Kompostieranlage keine belastete Abluft abgegeben wird.

Die vorstehend beschriebene Anlage ist ein Beispiel, das in dieser Form verwirklicht werden kann, von dem aber auch Abweichungen möglich sind. So kann es z.B. unter bestimmten Bedingungen zweckmässig sein, vor die Fermentation 7 eine Vorkompostierung zu setzen. Oder es ist möglich, wie in der Anlage gemäss Figur 1, Teile der Feststoffe von der Separation und/oder von der thermischen Eindickung statt der Kompostierung der thermischen Verwertung zuzuführen.

Alle vorstehenden Zahlenangaben beruhen auf konkreten Beispielen. Je nach der Art und der Zusammensetzung des Mülls und den gewünschten Endergebnissen können diese Zahlen stark variieren.

## Patentansprüche

1. Anlage zur mechanisch-biologischen Zwischenbehandlung von Müll, gekennzeichnet durch die Kombination einer Separationspresse (5) und einer nachgeschalteten Fermentationsanlage (7), sowie Mitteln zur Zuführung der brennbaren Fraktion am Ausgang der Presse zu einer Anlage (6) zur thermischen Verwertung.

2. Müllbehandlungsanlage nach Anspruch 1, dadurch gekennzeichnet, dass der Fermentationsanlage (7) eine Anlage (10, 28) zur thermischen Eindickung bzw. zum Eindampfen des flüssigen Anteils des Fermentationsprodukts nachgeschaltet ist.

3. Müllbehandlungsanlage nach Anspruch 1, dadurch gekennzeichnet, dass Mittel zur Rückführung eines Teils des flüssigen Anteils des Fermentationsprodukts zum Eingang der Fermentationsanlage (7) vorhanden sind.

4. Müllbehandlungsanlage nach Anspruch 1, dadurch gekennzeichnet, dass der Fermentationsanlage (7) eine Anlage zur chemisch-biologischen Abwasserbehandlung nachgeschaltet ist.

5. Müllbehandlungsanlage nach Anspruch 1, dadurch gekennzeichnet, dass der Fermentationsanlage (7) eine Waschanlage (15) vorgeschaltet ist, welcher eine kleinkörnige Fraktion (14) direkt zugeführt wird.

6. Müllbehandlungsanlage nach Anspruch 2, dadurch gekennzeichnet, dass zwischen Fermentationsanlage und Eindampfanlage ein Separator (9) zur mechanischen Separation von Wasser (27) und Feststoff (31) des Gärguts (36) eingeschaltet ist.

7. Müllbehandlungsanlage nach Anspruch 6, dadurch gekennzeichnet, dass dem Separator (9, 26) und der Eindampfanlage eine Kompostieranlage (33) nachgeschaltet ist.

8. Müllbehandlungsanlage nach Anspruch 1, dadurch gekennzeichnet, dass der Fermentationsanlage (7) ein Bioheizkraftwerk (21) nachgeschaltet ist, in dem Wärme (22) und Strom (23) erzeugt wird.

9. Müllbehandlungsanlage nach Anspruch 7, dadurch gekennzeichnet, dass der Kompostieranlage (33) und der Eindampfanlage (28) Biofiltertürme (30) nachgeschaltet sind.
